(19) **Europäisches Patentamt** / **European Patent Office** / **Office européen des brevets**

(11) **EP 3 496 554 B1**

(12) **EUROPEAN PATENT SPECIFICATION**

(45) Date of publication and mention
of the grant of the patent:
**20.05.2020 Bulletin 2020/21**

(51) Int Cl.:
**A23L 13/30** *(2016.01)* **A23L 23/10** *(2016.01)*
**A23P 10/28** *(2016.01)*

(21) Application number: **17754302.2**

(22) Date of filing: **02.08.2017**

(86) International application number:
**PCT/EP2017/069530**

(87) International publication number:
**WO 2018/029057 (15.02.2018 Gazette 2018/07)**

(54) **POWDERED BEEF FAT**

PULVERFÖRMIGES RINDFLEISCHFETT

GRAISSE DE BOEUF EN POUDRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2016 EP 16183570**

(43) Date of publication of application:
**19.06.2019 Bulletin 2019/25**

(73) Proprietor: **Société des Produits Nestlé S.A.**
**1800 Vevey (CH)**

(72) Inventors:
• **PERDANA, Jimmy**
 **78224 Singen (DE)**
• **BULLING, Katharina**
 **70176 Stuttgart (DE)**
• **MARAZZATO, Michele**
 **3510 Konolfingen Bern (CH)**
• **TRAPPO, Gregory**
 **78224 Singen (DE)**
• **KJOLBY, Christian**
 **1053 Bretigny-sur-Morrens (CH)**
• **SAGALOWICZ, Laurent**
 **1807 Blonay Vaud (CH)**

(74) Representative: **Dinger, Hansjörg**
**Société des Produits Nestlé S.A.**
**Avenue Nestlé 55**
**1800 Vevey (CH)**

(56) References cited:
**EP-A1- 0 780 058     EP-A1- 0 823 473**
**EP-A1- 1 401 295     EP-A1- 2 217 097**
**CN-B- 104 041 790**

**Description**

## TECHNICAL FIELD

The invention relates to a powdered beef fat and the manufacturing process for the production of a powdered beef fat. In particularly the invention relates to a powdered beef fat and to a process for the production of a powdered beef fat wherein the beef fat having a total saturated fat content of 54 to 72 wt% (based on weight of total fat) comprising at least 23.5 wt% (based on weight of total fat) of C18:0.

## BACKGROUND

It is well known to mix melted fat into other ingredients such as salt, taste enhancing compounds like monosodium glutamate (MSG), sugar, starch or flour, flavouring components, vegetables, meat extracts, spices, colorants etc. The amounts of the respective compounds may vary depending on the specific purpose of the product, the market or taste of the consumer that is aimed at.

An alternative process is to mix a powdered fat instead of a melted fat into other ingredients. The advantage of using a powdered fat instead of using a melted fat is that no heating is required to melt the fat, which might take a long time and needs energy. Also an even dispersion of the fat with the other ingredients is essential to achieve a homogenous product avoiding the formation of lumps, which can be cumbersome when fat is introduced in melted form.

It is crucial that a powdered fat should be solid at needed temperature and having a good flow-ability. In addition to the flow-ability of the fat itself also a good flow-ability of the bouillon powder is needed. The bouillon powder can be filled directly as a free flow-able powder into a packaging container or the bouillon powder can be pressed into tablet or cube form (hard bouillon tablet/cube). In addition the powdered fat can be used to prepare a dehydrated soup.

As the fat used in a bouillon powder/hard bouillon tablet should not stain the packaging and/or melt upon storage, hydrogenated vegetable oils/fats are used optionally together with liquid oil.

The most common used fat is palm fat as it provides good technical properties having a good flow-ability of the bouillon powder. In addition palm fat delivers good binding properties to a hard bouillon itself resulting in a good hardness of the tablet but still easy to crumble.

Consumers are increasingly becoming sensitive to palm fat concerns. Many of them perceive palm fat as not healthy and many others perceive it as not environmentally sustainable as a lot of news mention that the rain forest is destroyed to grow palm trees.

EP1401295 describes a hard bouillon tablet which only or mainly contains liquid oil, especially a healthy oil rich in monounsaturated fatty acids and/or polyunsaturated fatty acids, and no or only little amounts of fat. The drawback of using liquid oil instead of fat is that maltodextrin is needed which also is negatively perceived by the consumers. EP0823473 describes a process for producing a rapidly crystallizing fat with a low trans-fatty acid content comprising subjecting a mixture comprising palm fat hard stearin and an animal fat selected from the group consisting of beef tallow and beef tallow fractions to an interesterification. The fat is used to produce dry soups and sauces.

Hence there is an existing need in the art and food industry to provide a better solution for a powdered fat using no palm fat or no hydrogenated or partially hydrogenated fat and at least provides an alternative solution.

## SUMMARY OF THE INVENTION

The object of the present invention is to improve the state of the art or at least provide an alternative for a powdered fat:

   i) avoid using palm fat;
   ii) the fat has a good flow-ability (FFC above 2 at 23°C);
   iii) avoid the usage of hydrogenated oils and fats;
   iv) provide a binder which also add taste to the product;
   v) to use a fat which is stable against rancidity;
   vi) good flow-ability of a bouillon powder (FFC above 3 at 23°C);
   vii) process simplification for preparing a hard bouillon tablet as no storage time is needed to re-crystallize the fat;
   viii) improve dosing accuracy;
   ix) better distribution of fats during mixing with other ingredients;
   x) avoid lumps and stickiness during mixing with other ingredients;
   xi) no lump by same mixing parameters with other ingredients (batch size, speed and time).

The object of the present invention is achieved by the subject matter of the independent claims. The dependent claims further develop the idea of the present invention.

Accordingly, the present invention provides in a first aspect a powdered beef fat comprising a total saturated fat content of 54 to 72 wt% (based on weight of total fat) and at least 23.5 wt% (based on weight of total fat) of C18:0.

In a second aspect of the invention, there is provided a process for the preparation of a powdered beef fat comprising

a) Melting the fat;

b) Spraying the melted fat to generate fat droplets;

c) Solidification of the fat droplets through contact with a cooling agent selected from cold air or liquid nitrogen or liquid carbon dioxide;

wherein the beef fat has a total saturated fat content of 54 to 72 wt% (based on weight of total fat); and

wherein the beef fat comprises at least 23.5 wt% (based on weight of total fat) of C18:0.

A third aspect of the invention relates to a use of a powdered beef fat comprising a total saturated fat content of 54 to 72 wt% (based on weight of total fat) and at least 23.5 wt% (based on weight of total fat) of C18:0 for preparing a food product such as a soup, bouillon powder or hard bouillon tablet/cube.

It has been surprisingly found by the inventors that by using a fractionated beef fat powder having a total saturated fat content of 54 to 72 wt% (based on weight of total fat); and wherein the beef fat comprises at least 23.5 wt% (based on weight of total fat) of C18:0 we have now solved the requirement to achieve the necessary attributes:

- the fat has good flow-ability (FFC above 2 at 23°C);
- improved dosing properties and no caking;
- a bouillon powder having a good flow-ability (FFC above 3 at 23°C);
- no lumping by mixing with other ingredients;
- the usage of palm fat or hydrogenated fat can be avoided/replaced;
- no structuring agents are needed to reach a good flow-ability.

## DETAILED DESCRIPTION

The present invention pertains to a powdered beef fat comprising a total saturated fat content of 54 to 72 wt% (based on weight of total fat) and at least 23.5 wt% (based on weight of total fat) of C18:0.

In a preferred embodiment the present invention pertains to a powdered beef fat comprising a total saturated fat content of 57 to 68 wt% (based on weight of total fat) and 26 to 32 wt% (based on weight of total fat) of C18:0.

Herein, the powdered fat (or fat in powdered form) which is prepared by spray-cooling, spray-chilling or spray freezing is referred to as "powdered beef fat". "Powdered beef fat" according to this invention has particle size distribution with at least 50 % of the particles having diameter in the range of 15 to 1000 $\mu$m, preferably in the range of 20 to 900 $\mu$m, preferably in the range of 30 to 900 $\mu$m, preferably in the range of 30 to 800 $\mu$m, preferably in the range of 40 to 700 $\mu$m, preferably in the range of 40 to 500 $\mu$m, preferably in the range of 50 to 500 $\mu$m, preferably in the range of 50 to 400 $\mu$m, more preferably in the range of 50 to 300 $\mu$m.

"Fat droplets" according to this invention are prepared by spray-cooling, spray-chilling or spray freezing and have a particle size distribution with at least 50 % of the particles having diameter in the range of 15 to 1000 $\mu$m, preferably in the range of 20 to 900 $\mu$m, preferably in the range of 30 to 900 $\mu$m, preferably in the range of 30 to 800 $\mu$m, preferably in the range of 40 to 700 $\mu$m, preferably in the range of 40 to 500 $\mu$m, preferably in the range of 50 to 500 $\mu$m, preferably in the range of 50 to 400 $\mu$m, more preferably in the range of 50 to 300 $\mu$m.

"Cold air" according to this invention is defined as having a temperature below 15°C, preferably in a range between 15°C to -50°C, preferably in a range between 15°C to -10°C.

"Circularity" means a shape factor to describe the shape of powdered beef fat; independent of its size. It is the measure of roundness and therefore of how closely the shape of an object approaches that of a circle. In an embodiment the powdered beef fat has an average circularity in the range of 0.65 to 1, preferably in the range of 0.7 to 1, preferably in the range of 0.75 to 1. The circularity is observed under microscope using a magnification of at least 50x.

"Flow-ability" means flow properties on how easily a powder flows. Flow-ability ($ff_c$) is quantified as the ratio of consolidation stress $\sigma_1$ to unconfined yield strength $\sigma_c$ according to "Schulze, D. (2006). Flow properties of powders and bulk solids. Braunschweig/Wolfenbuttel, Germany: University of Applied Sciences." In an embodiment flow-ability ($ff_c$) of the powdered beef fat is at least 2 at 23°C, preferably between the range of 2 to 12 at 23°C, preferably between the range of 2 to 10 at 23°C, preferably between the range of 2 to 8 at 23°C, preferably between the range of 2 to 6 at 23°C. In an embodiment flow-ability of the bouillon powder using powdered beef fat is at least 3 at 23°C, preferably between the range of 3 to 20 at 23°C, preferably between the range of 3 to 15 at 23°C, preferably between the range of 3 to 10 at 23°C, preferably between the range of 3.5 to 10 at 23°C, preferably between the range of 3 to 7 at 23°C, preferably between the range of 3.5 to 7 at 23°C, preferably between the range of 3.5 to 6 at 23°C.

"Beef fat" according to this invention having a total saturated fat content of 54 to 72 wt% (based on weight of total fat) and comprises at least 23.5 wt% (based on weight of total fat) of C18:0 is a fractionated beef fat. In a preferred embodiment, the powdered fat of the present invention does not include hydrogenated fat. In an embodiment C18:0 is Stearic acid. In a further embodiment C18:0 is at least 23.5wt% (based on weight of total fat), preferably C18:0 is in the range of 23.5 to 36 wt% (based on weight of total fat), preferably C18:0 is in the range of 24.5 to 36 wt% (based on weight of total fat), preferably C18:0 is in the range of 25 to 36 wt% (based on weight of total fat), preferably C18:0 is in the range of 26 to 33 wt% (based on weight of total fat), more preferably C18:0 is in the range of 26.5 to 31 wt% (based on weight of total fat). In an embodiment the fat has a solid fat content at 30°C of 45 to 75 wt% (based on weight of total fat), preferably 48 to 75 wt% (based on weight of total fat), preferably 50 to 67 wt% (based on weight of total fat), more preferably 53 to 67 wt% (based on weight of total fat). In an embodiment the fat is a 100% non-hydrogenated fat. In an embodiment the fat does not include palm fat. In an embodiment the fat further comprises C16:0. C16:0 is Palmitic acid. In a further embodiment the fat further comprises C16:0 in the range of 24 to 33 wt% (based on weight of total fat), preferably C16:0 is in the range of 25 to 33 wt% (based on weight of total fat), preferably C16:0 is in the range of 25.5 to 33 wt% (based on weight of total fat), preferably C16:0 is in the range of 26 to 33 wt% (based on weight of total fat), more preferably C16:0 is in the range of 26.5 to 31 wt% (based on weight of total fat). Standard commercial available beef fat (see example 1) has a total saturated fat content of less than 52 wt% (based on weight of total fat) comprising the following key fatty acids C16:0 in the range of 20 to 25.4 wt% (based on weight of total fat) and C18:0 in the range of 15 to 22 wt% (based on weight of total fat). In an embodiment the melting point of the fat is in the range of between 50°C to 65°C, preferably between 50°C to 55°C.

"Bouillon powder" means a dehydrated stock that is in powder form. In an embodiment a bouillon powder comprises ingredients such as salt, taste enhancing compounds like monosodium glutamate (MSG), sugar, starch or flour, flavouring components, vegetables, meat extracts, spices, colorants and fat.

"Hard bouillon tablet" means "tablet or cube obtained by pressing a free flowing bouillon powder into a tablet or cube form"

## EXAMPLES

The invention is further described with reference to the following examples.

### Examples 1 to 4: Particle size and circularity

*Method for shredded powdered fat:*

Fat block was manually cut into small pieces and submerged in liquid nitrogen. Then, the "deep frozen" block of fats was milled with Blixer 5V (Robot Coupe, USA) with speed setting of 30 for 30s. The resulting powder was collected and stored at 7 °C for 12 h.

*Method for spray-cooled, spray-chilled or spray freezed powdered fat:*

Fat was melted at 70 °C, then sprayed into a bowl containing liquid nitrogen. The resulting powder was collected and stored at 7 °C for 12 h.

*Microscopy analysis of fat:*

Fat powder sample was spread over objective glass then viewed under microscope SZX12 (Olympus, Japan) equipped with a Colorview Illu (Olympus, Japan) CCD camera.

Magnification was set to 50 times. For example 4, a more powerful magnification is needed.

Thus, fat powder sample was viewed under Olympus BX51 microscope equipped with Olympus UPlanFL 10x/.30 Microscope Objective, U-TV1x-2 projection lens, and UC30 CCD camera. Images was captured using analySIS auto version 5.1 software (Olympus Soft Imaging GmbH, Germany). Image analysis was carried out using ImageJ ver. 1.5i (National Institutes of Health, USA). Circularity, measured with ImageJ, is defined as:

$$f_{circ} = \frac{4\pi \cdot A}{P^2}$$

with $f_{circ}$ is the circularity parameter, $A$ the area, and $P$ the perimeter of each individual powder. Circularity value of sphere is 1, while of star-like shapes gets closer to 0.

**Table 1:**

| Fat composition | Comp. Example 1 milled fat | Example 2 spray chilled | Example 3 spray chilled | Comp. Example 4 spray chilled |
|---|---|---|---|---|
| C16:0 = 28.2 C18:0 = 28.4 SFA (g/100g) = 62.5 SFA + TFA (g/100g) = 66.4 SFC at 30°C = 59.3 | Median particle size = 112 μm; Circularity = 0.56; flow-ability (FFC) = 1.4 | Median particle size = 166 μm; Circularity = 0.87; flow-ability (FFC) = 3.3 | Median particle size = 65 μm; Circularity = 0.78; flow-ability (FFC) = 2.7 | Median particle size = 7.5 μm; Circularity = 0.74; flow-ability (FFC) = 0.95 |

Table 1 shows, that a milled or shredded fat beef fat has a lower circularity and therefore a lower flow-ability.

For a further mixing step of the fat with other ingredients it was expected to have a particle size as small as possible to ensure homogeneity of the resulted product. In case a spray-cooled, spray-chilled or spray freezed process is used the flow-ability depends also on the particle size. As shown in example 4 a too small median particle size of 7.5 μm have a negative impact on the flow-ability of the fat itself and is therefore not considered for a further mixing step with other ingredients as salt, MSG, starch, flavours etc.

**Examples 5-7:**

Different kind of beef fats have been tested. All tested fats have an average particle size of 65 μm as example 3 above.

Flow-ability was measured using a Schulze Ring Shear Tester RST-01.pc according to ASTM D6467. Pre-shear normal stress was set to 2600 Pa and shear normal stress to 390, 1235, and 2080 Pa.

**Table 2:**

| Fat composition | Comp Ex. 5 | Ex. 6 | Ex. 7 |
|---|---|---|---|
| C16:0 | 25.4 | 27.4 | 28.2 |
| C18:0 | 21.3 | 25.9 | 28.4 |
| SFA (g/100g) | 51.5 | 58.8 | 62.5 |
| SFA + TFA (g/100g) | 55.5 | 62.8 | 66.4 |
| SFC at 23°C | 45.7 | 62.2 | 71.6 |
| SFC at 30°C | 27.8 | 50.2 | 59.3 |
| FFC (23°C) spray chilled | 1.7 | 2.7 | 3.3 |
| FFC (23°C) milled | 1.1 | 1.3 | 1.4 |

The comparison example 5 using standard beef fat powder has a lower flow-ability as the beef fat powder of the invention as shown within example 6 and 7. In addition the influence of the process of spray-cooled, spray-chilled or spray freezed fat powder compared to milled or shredded powder fat is shown. Only spray-cooled, spray-chilled or spray freezed fat powder can result in a desired flow-ability above 2 at 23°C. The greater a flow-ability value is the better the flow-ability. In case shredded or milled powder fat is produced the flow-ability is below 1.5 at 23°C independently of the fat composition.

**Examples 8-10**

*Preparation of bouillon (seasoning) powder with melted fat:*

Fat in block form was melted in an oven at 80 °C. Meanwhile, crystalline ingredients (e.g. salt, MSG), amorphous ingredients (e.g. starch) and flavourings (in powdered form) were weighted in PG5002S balance (Mettler-Toledo, USA) and then mixed manually. After the fat block was completely melted (clear and transparent in appearance), the liquid fat was added to powdered mixture. Subsequently, the mixture was transferred to Thermomix Type 31-1 (Vorwerk Elektrowerke GmbH & Co.AG, Germany). Mixing using Thermomix was carried out in speed 3 for 30 s with propeller rotation was set to reverse direction. One batch mixing was carried out for 500 g bouillon powder. The resulting powder was then stored in a sealed box for 24 h at room temperature prior to measure flow-ability.

*Preparation of bouillon (seasoning) powder with powdered fat:*

Crystalline ingredients (e.g. salt, MSG), amorphous ingredients (e.g. starch) and flavourings (in powdered form) were weighted in PG5002S balance (Mettler-Toledo, USA) and then mixed manually. The powdered fat was added to the other pre-mixed ingredients and further mixed using Thermomix Type 31-1 (Vorwerk Elektrowerke GmbH & Co.AG, Germany) at speed 3 for 30 s with propeller rotation set to reverse direction. One batch mixing was carried out for 500 g bouillon powder. The resulting powder was then immediately used to measure flow-ability as no fat recrystallization time is relevant.

*Pressing of bouillon tablet*

Bouillon pressing was carried out with Flexitab Tablet Pressing equipment (Roltgen GmbH, Germany). Ten gram of bouillon powder was fed to tableting mold (31 mm in length and 23 mm in width) and the Röltgen tablet pressing was adjusted (between 8 and 11 mm) to reach a pressing force of 15 kN.

*Measurement of bouillon tablet hardness*

Hardness measurement was carried out using Texture Analyser TA-HDplus (Stable Micro System, UK) equipped with 250 kg load cell and P/75 compression platen. Texture Analyser test mode was set to "Compression" with pre-test speed of 1 mm/s, test speed of 0.5 mm/s, post-test speed of 10 mm/s, target mode of "Distance", distance of 3 mm, halt time was set to "No", way back of 10 mm, trigger type to "Auto(Force), and trigger force of 50 gram. Bouillon tablet was placed centrally in vertical-landscape orientation. Hardness measurement was carried out in 10 replication.

**Table 3:**

|  | Comp Ex. 8 | Ex. 9 | Ex. 10 |
|---|---|---|---|
| Salt | 49wt% | 49wt% | 49wt% |
| MSG | 20wt% | 20wt% | 20wt% |
| Maltodextrin | 10wt% | 10wt% | 10wt% |
| Starch | 10wt% | 10wt% | 10wt% |
| Flavourings | 1wt% | 1wt% | 1wt% |
| Fat | 10wt% beef fat | 10wt% beef fat | 10wt% beef fat |
| Fat Composition |  |  |  |
| C16:0 | 25.4 | 27.4 | 28.2 |
| C18:0 | 21.3 | 25.9 | 28.4 |
| SFA (g/100g) | 51.5 | 58.8 | 62.5 |
| SFA + TFA (g/100g) | 55.5 | 62.8 | 66.4 |
| SFC at 30°C | 27.8 | 50.2 | 59.3 |
| FFC bouillon powder with melted fat at 23°C | 1.9 lumps | 2.7 lumps but less as ex.8 | 2.9 lumps but less as ex.9 |
| Tablet hardness (N) | 80 | 133 | 186 |
| FFC bouillon powder with powdered fat at 23°C | 2.2 lumps | 4.2 no lumps | 4.9 no lumps |
| Tablet hardness (N) | 88 | 136 | 176 |

(continued)

| Fat Composition | | | |
|---|---|---|---|
| Tablet breakage | 90% | 4% | 3.5% |

The comparison example 8 using standard powdered beef fat in melted or powdered form has a lower flow-ability of a resulting bouillon powder as the beef fat of the invention as shown within examples 9 and 10. In addition the influence of powdered beef fat compared to a melted beef fat is shown. Only powdered beef fat can result in a desired flow-ability of the bouillon powder above 3 at 23°C. In addition the bouillon powder with comparison example 8 using standard powdered beef fat showed lumps as examples 9 and 10 did not show lumps within the same mixing conditions (time) for powdered beef fat. The resulting tablet hardness after pressing the bouillon powder using melted or powdered fat are similar for the same fat composition. The comparison example 8 using standard beef fat has a lower tablet hardness as the beef fat of the invention as shown within examples 9 and 10. The lower tablet hardness for standard beef fat results in a tablet breakage of 90% compared to 4% for the fat of the invention as shown within examples 9 and 10 during the wrapping process of the tablet. In addition a technical panel of 6 trained people evaluated the crumbliness of example 8, 9 and 10 using powdered or melted beef fat. The tablet of example 8 using powdered or melted fat has been perceived as too soft and all participants complained about oily fingers. Example 9 and 10 have good crumbliness properties for powdered or melted fat with a slightly preference for example 10. No complaints of the participants regarding oily fingers has been described for examples 9 and 10.

## Claims

1. A powdered beef fat comprising a total saturated fat content of 54 to 72 wt% (based on weight of total fat) and at least 23.5 wt% (based on weight of total fat) of C18:0.

2. A powdered beef fat as claimed in claim 1, wherein the beef fat is a non-hydrogenated beef fat.

3. A powdered beef fat as claimed in any one of claims 1 to 2, wherein the beef fat is a non-hydrogenated fractionated beef fat.

4. A powdered beef fat as claimed in any one of claims 1 to 3, wherein the beef fat has a flow-ability of at least 2 at 23°C.

5. A powdered beef fat as claimed in any one of claims 1 to 4, wherein the beef fat has a particle size distribution with at least 50% of the particles diameter in the range of 15 to 1000$\mu$m, as measured under the title "microscopy analysis of fat" described in the description.

6. A powdered beef fat as claimed in any one of claims 1 to 5, wherein the beef fat has a circularity in the range of 0.65 to 1, as measured under the title "microscopy analysis of fat" described in the description.

7. A powdered beef fat as claimed in any one of claims 1 to 6, wherein the amount of C18:0 is in the range of 23.5 to 36% (by weight of the composition), preferably in the range of 24.5 to 36% (by weight of the composition).

8. A powdered beef fat as claimed in any one of claims 1 to 7 does not include palm fat.

9. A powdered beef fat as claimed in any one of claims 1 to 8 further comprises 25.5 to 33 wt% (based on weight of total fat) of C16:0.

10. A process for the preparation of powdered beef fat as claimed in any one of claims 1 to 9 comprising

    a) Melting the fat;
    b) Spraying the melted fat to generate fat droplets;
    c) Solidification of the fat droplets through contact with a cooling agent selected from cold air or liquid nitrogen or liquid carbon dioxide.

11. A process for the preparation of powdered beef fat as claimed in claim 10, wherein the fat droplet has a particle size distribution with at least 50% of the particles diameter in the range of 15 to 1000$\mu$m, as measured under the title "microscopy analysis of fat" described in the description.

12. The use of powdered beef fat as claimed in any of claims 1 to 10 for preparing a food product.

13. The use of powdered beef fat as claimed in claim 12, wherein the food product is a soup, a bouillon powder or a bouillon tablet/cube.


**Patentansprüche**

1. Pulverförmiges Rinderfett, umfassend einen Gesamtgehalt an gesättigtem Fett von 54 bis 72 Gew.-% (bezogen auf das Gesamtfettgewicht) und mindestens 23,5 Gew.-% (bezogen auf das Gesamtfettgewicht) an C18:0.

2. Pulverförmiges Rinderfett nach Anspruch 1, wobei das Rinderfett ein ungehärtetes Rinderfett ist.

3. Pulverförmiges Rinderfett nach einem der Ansprüche 1 bis 2, wobei das Rinderfett ein ungehärtetes fraktioniertes Rinderfett ist.

4. Pulverförmiges Rinderfett nach einem der Ansprüche 1 bis 3, wobei das Rinderfett bei 23 °C eine Fließfähigkeit von mindestens 2 aufweist.

5. Pulverförmiges Rinderfett nach einem der Ansprüche 1 bis 4, wobei das Rinderfett eine Partikelgrößenverteilung mit mindestens 50 % der Partikeldurchmesser im Bereich von 15 bis 1000 $\mu$m aufweist, wie in der Beschreibung unter der Überschrift "Mikroskopieanalyse von Fett" beschrieben gemessen.

6. Pulverförmiges Rinderfett nach einem der Ansprüche 1 bis 5, wobei das Rinderfett eine Kreisförmigkeit im Bereich von 0,65 bis 1 aufweist, wie in der Beschreibung unter der Überschrift "Mikroskopieanalyse von Fett" beschrieben gemessen.

7. Pulverförmiges Rinderfett nach einem der Ansprüche 1 bis 6, wobei die Menge an C18:0 im Bereich von 23,5 bis 36 % (bezogen auf das Gewicht der Zusammensetzung), vorzugsweise im Bereich von 24,5 bis 36 % (bezogen auf das Gewicht der Zusammensetzung) liegt.

8. Pulverförmiges Rinderfett nach einem der Ansprüche 1 bis 7 schließt kein Palmfett ein.

9. Pulverförmiges Rinderfett nach einem der Ansprüche 1 bis 8 umfasst ferner 25,5 bis 33 Gew.-% (bezogen auf das Gesamtfettgewicht) an C16:0.

10. Verfahren zur Herstellung von pulverförmigem Rinderfett nach einem der Ansprüche 1 bis 9, umfassend

   a) Schmelzen des Fetts;
   b) Sprühen des geschmolzenen Fetts, um Fetttröpfchen zu erzeugen;
   c) Verfestigen der Fetttröpfchen durch Kontakt mit einem Kühlmittel, ausgewählt aus kalter Luft oder flüssigem Stickstoff oder flüssigem Kohlendioxid.

11. Verfahren zur Herstellung von pulverförmigem Rinderfett nach Anspruch 10, wobei das Fetttröpfchen eine Partikelgrößenverteilung mit mindestens 50 % der Partikeldurchmesser im Bereich von 15 bis 1000 $\mu$m aufweist, wie in der Beschreibung unter der Überschrift "Mikroskopieanalyse von Fett" beschrieben gemessen.

12. Verwendung von pulverförmigem Rinderfett nach einem der Ansprüche 1 bis 10 zum Herstellen eines Nahrungsmittelprodukts.

13. Verwendung von pulverförmigen Rinderfett nach Anspruch 12, wobei das Nahrungsmittelprodukt eine Suppe, ein Bouillonpulver oder ein(e) Bouillontablette/Bouillonwürfel ist.

**Revendications**

1. Graisse de bœuf pulvérulente comprenant une teneur totale en graisses saturées de 54 à 72 % en poids (sur la base du poids de la graisse totale) et au moins 23,5 % en poids (sur la base du poids de la graisse totale) de C18:0.

2. Graisse de bœuf pulvérulente selon la revendication 1, dans laquelle la graisse de bœuf est une graisse de bœuf non hydrogénée.

3. Graisse de bœuf pulvérulente selon l'une quelconque des revendications 1 à 2, dans laquelle la graisse de bœuf est une graisse de bœuf fractionnée non hydrogénée.

4. Graisse de bœuf pulvérulente selon l'une quelconque des revendications 1 à 3, dans laquelle la graisse de bœuf a une capacité d'écoulement d'au moins 2 à 23 °C.

5. Graisse de bœuf pulvérulente selon l'une quelconque des revendications 1 à 4, dans laquelle la graisse de bœuf a une distribution granulométrique avec au moins 50 % du diamètre particulaire dans la plage de 15 à 1000 µm, telle que mesurée sous le titre « analyse microscopique de graisse » décrit dans la description.

6. Graisse de bœuf pulvérulente selon l'une quelconque des revendications 1 à 5, dans laquelle la graisse de bœuf a une circularité dans la plage de 0,65 à 1, telle que mesurée sous le titre « analyse microscopique de graisse » décrit dans la description.

7. Graisse de bœuf pulvérulente selon l'une quelconque des revendications 1 à 6, dans laquelle la quantité de C18:0 est dans la plage de 23,5 à 36 % (en poids de la composition), de préférence dans la plage de 24,5 à 36 % (en poids de la composition).

8. Graisse de bœuf pulvérulente selon l'une quelconque des revendications 1 à 7 n'inclut pas de graisse de palme.

9. Graisse de bœuf pulvérulente selon l'une quelconque des revendications 1 à 8 comprend en outre 25,5 à 33 % en poids (sur la base du poids de la graisse totale) de C16:0.

10. Procédé de préparation de graisse de bœuf pulvérulente selon l'une quelconque des revendications 1 à 9 comprenant

    a) la fusion de la graisse ;
    b) la pulvérisation de la graisse fondue pour générer des gouttelettes de graisse ;
    c) la solidification des gouttelettes de graisse par contact avec un agent refroidissant choisi parmi de l'air froid ou de l'azote liquide ou du dioxyde de carbone liquide.

11. Procédé de préparation de graisse de bœuf pulvérulente selon la revendication 10, dans lequel la gouttelette de graisse a une distribution granulométrique avec au moins 50 % du diamètre particulaire dans la plage de 15 à 1000 µm, telle que mesurée sous le titre « analyse microscopique de graisse » décrit dans la description.

12. Utilisation de graisse de bœuf pulvérulente selon l'une quelconque des revendications 1 à 10 pour la préparation d'un produit alimentaire.

13. Utilisation de graisse de bœuf pulvérulente selon la revendication 12, dans laquelle le produit alimentaire est une soupe, une poudre de bouillon ou un cube/une tablette de bouillon.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1401295 A

- EP 0823473 A

**Non-patent literature cited in the description**

- **SCHULZE, D.** Flow properties of powders and bulk solids. University of Applied Sciences, 2006